# EUROPÄISCHE PATENTSCHRIFT

(11) **EP 1 869 121 B1**
(45) Veröffentlichungstag und Bekanntmachung des Hinweises auf die Patenterteilung: **09.09.2009**
(21) Anmeldenummer: 06723955.8
(22) Anmeldetag: 01.04.2006
(51) Int. Cl.: C08L 59/02

(54) **POLYOXYMETHYLEN-ZUSAMMENSETZUNGEN, DEREN HERSTELLUNG UND VERWENDUNG**
POLYOXYMETHYLENE COMPOSITIONS, PRODUCTION THEREOF AND THEIR USE
COMPOSITIONS DE POLYOXYMETHYLENE, LEUR PRODUCTION ET LEUR UTILISATION

(30) Priorität: 08.04.2005 DE 102005016130
(43) Veröffentlichungstag der Anmeldung: 26.12.2007
(73) Patentinhaber: Ticona GmbH, 65451 Kelsterbach (DE)
(72) Erfinder: SCHMALZ, Holger, 95448 Bayreuth (DE); KÖSTLER, Christine, 65795 Hattersheim (DE); KURZ, Klaus, 65451 Kelsterbach (DE)
(86) Internationale Anmeldenummer: PCT/EP2006/002996
(87) Internationale Veröffentlichungsnummer: WO 2006/105918

(56) Entgegenhaltungen:
- US-A- 3 213 158
- US-A1- 2004 116 575

## Beschreibung

Die vorliegende Erfindung betrifft neue Polyoxymethylen-Formmassen sowie deren Herstellung und Verwendung, insbesondere als Formmasse für Spritzguss, Blasformen und Extrusion zur Herstellung von Formkörpern jeglicher Art.

Polyoxymethylen (nachstehend auch als "POM" bezeichnet) ist ein Hochleistungspolymer mit guten mechanischen Eigenschaften, wie Steifigkeit und Festigkeit. Allerdings ist POM aufgrund seiner hohen Polarität und Kristallinität häufig nicht oder nur teilweise mit anderen Polymeren verträglich. Ferner ist es nur in Ausnahmefällen möglich, funktionelle Comonomere in POM einzubauen.

Es hat bereits Versuche zur Herstellung von Pfropfpolymeren gegeben, und dabei funktionalisiertes POM einzusetzen.

So beschreiben die EP-A-397,492, die EP-A-398,585 und die EP-A-397,494 funktionalisierte Polyoxymethylene, die durch Copolymerisation von Trioxan und dem Formal des Trimethylolpropan(esters), von Trioxan und den α,α- und α,β-Isomeren des Glycerinformal(esters) oder von Trioxan und dem Formal des 1,2,6-Hexantriol(esters) hergestellt werden.

Aus der EP-A-400,827 sind Propfpolymere bekannt, die sich von funktionali-siertem POM und mit Aminogruppen funktionalisierten Polymeren ableiten. Das funktionalisierte POM weist Acrylat- oder Acrylatestergruppen auf und das mit Aminogruppen funktionalisierte Polymer wird durch Michael Addition an das funktionalisierte POM gebunden. Diese Pfropfpolymeren werden unter anderem zum Einsatz als Phasenvermittler zwischen POM und Polymeren, welche dem Aminogruppen funktionalisierten Polymer ähneln, vorgeschlagen. Nachteilig bei diesen Ansätzen ist, dass die Reaktion nur in Lösung möglich ist.

Aus der EP-A-397,493 sind Propfpolymere bekannt, die sich von mit Hydroxylgruppen funktionalisiertem POM, Diisocyanaten und mit Hydroxyl-, Amino-oder Carboxylgruppen funktionalisiertem Polymer ableiten. Letzteres wird durch Diisocyanat-Kopplung an das funktionalisierte POM gebunden. Diese Pfropfpolymeren werden unter anderem zum Einsatz als Phasenver-mittler zwischen POM und anderen geeigneten Polymeren vorgeschlagen. Hinweise auf eine Reaktivextrusion unter in-situ Herstellung eines Phasenvermittlers bzw. auf eine Kopplung von Schlagzäh-modifizierer an funktionalisiertes POM sind dem Dokument nicht zu entnehmen.

Es ist auch bereits seit langem bekannt, die Schlagzähigkeit von POM durch den Einsatz von Schlagzähmodifikatoren zu beeinflussen. Beispiele dafür sind thermoplastische Polyurethan-Elastomere (nachstehend auch "TPE-U" genannt), Methylmethacrylat / Butadien / Styrol-core-shell-Elastomere, Methylmethacrylat /Acrylat-core-shell-Elastomere, Polycarbonat, Styrol / Acrylnitril-Copolymere oder Acrylat / Styrol / Acrylnitril-Copolymer Compounds.

Ausgehend von diesem Stand der Technik ist es Aufgabe der vorliegenden Erfindung, neue schlagzäh-modifizierte POM-Zusammensetzungen bereitzustellen, die sich durch eine verbesserte Kombination von Zähigkeit, Bruchdehnung und Bindenahtfestigkeit auszeichnen. Die Verbesserung der Zähigkeit läßt sich durch günstige Werte für die Kerbschlagzähigkeit sowie für die Schädigungsarbeit feststellen.

Eine weitere Aufgabe der vorliegenden Erfindung ist die Bereitstellung eines Verfahrens, mit dem die Verträglichkeit ausgewählter Schlagzäh-Modifikatoren mit der POM-Matrix verbessert wird und bei dem der Einsatz von Lösungsmitteln entfallen kann. Durch den Einsatz eines in-situ gebildeten Verträglichkeitsvermittlers in Form eines kovalent an POM angebundenen Schlagzäh-Modifikators läßt sich die Verträglichkeit zwischen POM-Phase und der Phase des Schlagzähmodifikators verbessern. Durch den Einsatz des Verträglichkeitsvermittlers verkleinert sich die Phase des Schlagzäh-Modifikators und dessen Dispergierung in der POM-Matrix wird erleichtert.

Noch eine weitere Aufgabe der vorliegenden Erfindung ist die Bereitstellung eines Verfahrens zur Herstellung von POM Formmassen, bei dem mit herkömmlichen Apparaten gearbeitet werden kann und das hervorragend schlagzäh-ausgerüstete POM-Formmassen liefert.

Die Erfindung betrifft Zusammensetzungen enthaltend
a) Polyoxymethylen,
b) thermoplastisches Elastomer mit aktiven Wasserstoffatomen,
c) aktive Wasserstoffatome, vorzugsweise Hydroxylgruppen enthaltendes Polyoxymethylen, das sich von Komponente a) unterscheidet,
d) Reagenz zur kovalenten Kopplung von Komponenten b) und c), und
e) gegebenenfalls einen weiteren Schlagzähmodifikator, der sich von Komponente b) unterscheidet.

Komponente a) der erfindungsgemäßen Zusammensetzungen sind Oxymethylenhomo- oder -copolymerisate.

Bei den Polyoxymethylenen (POM), wie sie beispielsweise in der DE-A-29 47 490 beschrieben sind, handelt es sich im Allgemeinen um unverzweigte lineare Polymere, die in der Regel mindestens 80 %, vorzugsweise mindestens 90 %, Oxymethyleneinheiten (-CH₂-O-) enthalten. Der Begriff Polyoxymethylene umfasst dabei sowohl Homopolymere des Formaldehyds oder seiner cyclischen Oligomeren, wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z. B. durch Veresterung oder durch Veretherung. Copolymere sind Polymere aus Formaldehyd oder seinen cyclischen Oligomeren, insbesondere Trioxan, und cyclischen Ethern, cyclischen Acetalen und/oder linearen Polyacetalen.

Derartige POM-Homo- oder Copolymerisate sind dem Fachmann an sich bekannt und in der Literatur beschrieben.

Ganz allgemein weisen diese Polymere mindestens 50 mol-% an wiederkehrenden Einheiten -CH₂-O- in der Polymerhauptkette auf. Die Homopolymeren werden im allgemeinen durch Polymerisation von Formaldehyd oder Trioxan hergestellt, vorzugsweise in der Gegenwart von geeigneten Katalysatoren.

In den erfindungsgemäßen Zusammensetzungen werden POM-Copolymere bevorzugt, insbesondere solche, die neben den wiederkehrenden Einheiten -CH₂-O-noch bis zu 50, vorzugsweise von 0,1 bis 20 und insbesondere 0,5 bis 10 Mol- % an wiederkehrenden Einheiten

-O-R¹-

enthalten, wobei R¹ eine gesättigte oder ethylenisch ungesättigte Alkylengruppe mit mindestens zwei Kohlenstoffatomen oder eine Cycloalkylengruppe ist, die gegebenenfalls Schwefel- oder vorzugsweise Sauerstoffatome in der Kette aufweist und die gegebenenfalls ein oder mehrere Substituenten trägt, die ausgewählt werden aus der Gruppe bestehend aus Alkyl, Cycloalkyl, Aryl, Aralkyl, Heteroaryl, Halogen oder Alkoxy.

R¹ ist vorzugsweise eine C₂-C₄Alkylengruppe, die gegebenenfalls mit ein oder mehreren C₁-C₄-Alkylgruppen, C₁-C₄-Alkoxygruppen und/oder Halogen-atomen, vorzugsweise Chloratomen, substituiert ist oder eine Gruppe der Formel -((CₙH₂ₙ)-O-)ₘ, worin n eine ganze Zahl von 2-4 ist und m 1 oder 2 bedeutet.

Vorteilhafterweise können diese Gruppen durch Ringöffnung von cyclischen Ethern und/oder Acetalen in die Copolymeren eingeführt werden.

Bevorzugte cyclische Ether oder Acetale sind solche der Formel 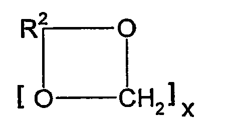 worin x 0 oder 1 ist und R² eine C₂-C₄Alkylengruppe bedeutet, die gegebenenfalls mit ein oder mehreren C₁-C₄-Alkylgruppen, C₁-C₄-Alkoxygruppen und/oder Halogenatomen, vorzugsweise Chloratomen, substituiert ist.

Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale, wie Polydioxolan oder Polydioxepan, als Comonomere genannt.

Besonders vorteilhaft werden Copolymere aus 99,5 - 95 Mol-% Trioxan und 0,5 bis 5 mol-% eines der vorgenannten Comonomere eingesetzt.

Als Polyoxymethylene ebenfalls geeignet sind Oxymethylenterpolymerisate, die beispielsweise durch Umsetzung von Trioxan, einem der vorstehend beschriebenen cyclischen Ether oder Acetal und mit einem dritten Monomeren, vorzugsweise einer bifunktionellen Verbindung der Formel 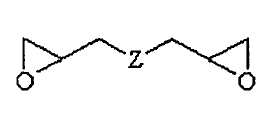 wobei Z eine chemische Bindung, -O- oder -O-R⁶-O- (R⁶ = C₂- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd im Molverhältnis 2 : 1, sowie Diether aus 2 Mol Glycidylverbindung und 1 Mol eines aliphatischen Diols mit 2 bis 8 C-Atomen, wie beispielsweise die Diglycidylether von Ethylenglykol, 1,4-Butandiol, 1,3-Butandiol, Cyclobutan-1,3-diol, 1,2-Propandiol und Cyclohexan-1,4₋diol, sowie Diglycerindiformal um nur einige Beispiele zu nennen.

Verfahren zur Herstellung der vorstehend beschriebenen POM-Homo- und Copolymerisate sind dem Fachmann bekannt und in der Literatur beschrieben.

Die bevorzugten POM-Copolymere haben Schmelzpunkte von mindestens 150°C und Molekulargewichte (Gewichtsmittelwert) M_{w} im Bereich von 5.000 bis 200.000, vorzugsweise von 7.000 bis 150.000.

Endgruppenstabilisierte POM-Polymerisate, die an den Kettenenden C-CBindungen oder die Methoxy-Endgruppen aufweisen, werden als Komponente a) besonders bevorzugt.

Die als Komponente a) eingesetzten POM-Polymere haben im allgemeinen einen Schmelzindex (MVR Wert 190/2,16) von 2 bis 50 cm³/10 min (ISO 1133).

Als Komponente b) enthalten die erfindungsgemäßen Zusammensetzungen thermoplastische Elastomere, welche aktive Wasserstoffatome aufweisen. Darunter sind solche thermoplastischen Elastomeren zu verstehen, die unter den gewählten Verarbeitungsbedingungen mit den aktiven Wasserstoffatomen der Komponente c) und dem als Komponente d) eingesetzten Kopplungsreagenz kovalente Bindungen einzugehen vermögen.

Beispiele für thermoplastische Elastomere sind Polyester-Elastomere (TPE-E), thermoplastische Polyamid-Elastomere (TPE-A) und insbesondere thermoplastische Polyurethan-Elastomere (TPE-U). Diese thermoplastischen Elastomeren weisen aktive Wasserstoffatome auf, die mit dem Kopplungs-reagenz umgesetzt werden können. Beispiele für solche Gruppen sind Urethangruppen, Amidgruppen, Aminogruppen oder Hydroxylgruppen beispielsweise von endständigen Polyesterdiol-Weichsegmenten thermoplastischer Polyurethan-Elastomerer, die Wasserstoffatome aufweisen, welche beispielsweise mit Isocyanat- oder Kohlesäureestergruppen abreagieren können.

Komponente c) der erfindungsgemäßen Zusammensetzungen ist ein aktive Wasserstoffatome enthaltendes und sich von Komponente a) unterscheidendes Polyoxymethylen. Diese Komponente kann endständige Gruppen mit aktiven Wasserstoffatomen, beispielsweise Aminogruppen oder insbesondere Hydroxylgruppen aufweisen, beispielsweise Hydroxyethylen-gruppen, und/oder das Polyoxymethylen kann seitenständige Gruppen mit aktiven Wasserstoffatomen, beispielsweise Aminogruppen oder insbesondere Hydroxylgruppen aufweisen.

Die Polyoxymethylenreste der Komponente c) können aus den oben beschriebenen Polyoxymethlyenresten der Komponente a) ausgewählt werden, die jedoch mit den end- und/oder seitenständigen aktive Wasserstoffatome enthaltenden Gruppen funktionalisiert sind.

Die zur Herstellung der Komponente c) eingesetzten POM-Polymere haben im allgemeinen einen Schmelzindex (MVR Wert 190/2,16) von 2 bis 70 cm³/10 min (ISO 1133), vorzugsweise von 5 bis 60 cm³/10 min.

Beispiele für hydroxyl-funktionalisierte Polyoxymethylene finden sich in den EP-A-397,492, EP-A-398,585 und EP-A-397,494.

Bevorzugt werden hydroxyl-funktionalisierte Polyoxymethylene eingesetzt, die sich ableiten von Copolymeren des Trioxans mit dem Formal des Trimethylol-propans, des Trioxans mit den α,α- und α,β-Isomeren des Glycerinformals oder des Trioxans und dem Formal des 1,2,6-Hexantriols.

Weitere bevorzugt eingesetzte Komponenten c) sind Polyoxymethylen-Homo- oder - Copolymere mit endständigen Hydroxyalkylengruppen, vorzugsweise Hydroxyethylengruppen. Beispiele für solche Polymeren sind in der WO-A-2005/023,898 zu finden.

Zur Ausbildung der Brückengruppe zwischen den Komponenten b) und c) können unterschiedlichste multifunktionelle, vorzugsweise tri- oder insbesondere bifunktionelle Kopplungsreagenzien eingesetzt werden, die mit den aktiven Wasserstoffatomen der Komponente c) einerseits und den aktiven Wasserstoffatomen der Komponente b) andererseits kovalente Bindungen auszubilden vermögen.

Bevorzugt handelt es sich bei Komponente d) um ein Diisocyanat, vorzugs-weise um ein aliphatisches, cycloaliphatisches und/oder aromatisches Diisocyanat.

Komponente d) kann auch in Form von Oligomeren, vorzugsweise Tri- oder insbesondere Dimeren, gegebenenfalls in Mischung zusammen mit einem Polymeren eingesetzt werden. Beispiele dafür sind Mischungen von dimeren Diisocyanaten in Polylactonen.

Beispiele für Diisocyanate sind aromatische Diisocyanate, wie Toluoldiisocyanat, Naphthyldiisocyanate, Diphenyl-methan-2,4'-düsocyanat oder 4,4'-Diisocyanatodiphenylmethan; oder (cyclo)aliphatische Diisocyanate, wie Hexamethylendiisocyanat oder Isophorondiisocyanat.

Eine weitere bevorzugte Gruppe der Kopplungsreagenzien d) wird ausgewählt aus einem aktivierten Diester oder einem aktivierten Diamid. Unter aktiviertem Diester oder aktiviertem Diamid sind im Rahmen dieser Beschreibung solche Diester oder Diamide zu verstehen, die unter Verarbeitungsbedingungen der erfindungsgemäßen Formmasse mit dem thermoplastischen Elastomer b) und dem Gruppen mit aktiven Wasserstoffatomen enthaltenden Polyoxymethylen c) kovalente Bindungen einzugehen vermögen. Dabei handelt es sich insbe-sondere um Derivate der Kohlensäure, wie Ester der Kohlensäure oder aktivierte Harnstoffderivate, oder um Ester oder Halbester von Dicarbonsäuren, oder um Dianhydride von Tetracarbonsäuren.

Bei der Auswahl der Kopplungsreagenzien d) ist darauf zu achten, daß diese im umzusetzenden Gemisch bei Verarbeitungs- bzw. Reaktionsbedingungen zumindest teilweise löslich sind, so daß sie für eine Kopplungsreaktion zur Verfügung stehen. Unter "ausreichend löslich" wird im Rahmen dieser Beschreibung eine Löslichkeit von mindestens 1 mg/kg verstanden.

Bevorzugt werden Diester von aromatischen oder von aliphatischen Dicarbonsäuren oder insbesondere Diester der Kohlensäure, ganz besonders bevorzugt Diarylester.

Ein bevorzugtes Beispiel für einen Diarylester der Kohlensäure ist Diphenylcarbonat.

Ebenfalls bevorzugt werden Diester der Oxalsäure, insbesondere der Diphenyloder der Dimethylester.

Bevorzugte Beispiele für Diester von aromatischen Dicarbonsäuren sind Diphenylester oder Dimethylester der Isophthalsäure oder der Terephthalsäure.

Bevorzugte Beispiele für Diester von aliphatischen Dicarbonsäuren sind Diphenylester oder Dimethylester der Adipinsäure oder der Sebazinsäure.

Ein bevorzugtes Beispiel für ein Dianhydrid von Tetracarbonsäuren ist Oxy-bisphthalsäureanhydrid.

Ein bevorzugtes Beispiel für ein aktiviertes Harnstoffderivat ist N,N'-Carbonyl-bis-caprolactamat oder Carbonyldiimidazol.

Besonders bevorzugt eingesetzte Komponenten b) sind thermoplastische Polyester-Elastomere (TPE-E), thermoplastische Polyamid-Elastomere (TPEA) thermoplastische Polyurethan-Elastomere (TPEU) oder eine Kombination von mehreren dieser thermoplastischen Elastomeren.

Die erfindungsgemäße Zusammensetzung enthält gegebenenfalls neben Komponente b) noch einen weiteren Schlagzähmodifikator, der sich von Komponente b) unterscheidet, beispielsweise Core-Shell Schlagzäh-modifikatoren. Derartige Komponenten sind dem Fachmann bekannt.

Bevorzugt sind ebenfalls Zusammensetzungen enthaltend als Komponente c) hydroxyl-funktionalisierte Polyoxymethylene, die sich ableiten von Copolymeren des Trioxans mit dem Formal des Trimethylol-propans, des Trioxans mit den α,α- und α,β-Isomeren des Glycerinformals oder des Trioxans und dem Formal des 1,2,6-Hexantriols oder deren Komponente c) Polyoxy-methylen-Homo- oder -Copolymeren mit endständigen Hydroxyalkylengruppen, vorzugsweise Hydroxyethylengruppen, bedeutet.

Die Menge an Komponente a) in den erfindungsgemäßen Zusammensetzungen beträgt üblicherweise 40 bis 98 Gew. %, vorzugsweise 70 bis 96 Gew. %.

Die Menge an Komponente b) in den erfindungsgemäßen Zusammensetzungen beträgt üblicherweise 1 bis 50 Gew. %, vorzugsweise 4 bis 30 Gew. %.

Die Menge an Komponente c) in den erfindungsgemäßen Zusammen-setzungen beträgt üblicherweise 0,1 bis 20 Gew. %, vorzugsweise 1 bis 10 Gew. %.

Die Menge an Komponente e) in den erfindungsgemäßen Zusammen-setzungen beträgt üblicherweise 0 bis 50 Gew. %.

Dabei beziehen sich die obigen Mengenangaben auf die Summe der Komponenten a), b), c), d) und gegebenenfalls e).

Die Erfindung betrifft auch ein Verfahren zur Herstellung der oben definierten Zusammensetzungen.

Das Verfahren umfaßt die Maßnahmen:
i) Vorlage von Polyoxymethylen (Komponente a),
ii) Vorlage von thermoplastischem Elastomer mit aktiven Wasserstoffatomen (Komponente b),
iii) Vorlage von aktive Wasserstoffatome enthaltendem Polyoxymethylen, das sich von in Schritt i) eingesetztem Polyoxymethylen unterscheidet (komponente c),
iv) Vorlage von multifunktionellem Kopplungsreagenz, das sowohl mit den aktiven Wasserstoffatomen des Polyoxymethylens als auch mit den aktiven Wasserstoffatomen des thermoplastischen Elastomeren reagiert und kovalente Bindungen auszubilden vermag (Komponente d),
v) gegebenenfalls Vorlage eines weiteren Schlagzähmodifikators, der sich von dem in Schritt ii) eingesetzten thermoplastischem Elastomer unterscheidet (Komponente e),
vi) Vermischen der reaktiven Komponenten b), c) und d) und gegebenenfalls der nicht-reaktiven Komponenten a) und/oder e),
vii) Erhitzen der Zusammensetzung um die kovalente Kopplung der reaktiven Komponenten b), c) und d) zu bewirken, und
viii) gegebenenfalls Vermischen des in Schritt vii) erhaltenen Reaktionsproduktes mit Komponente a) und/oder e).

Die Umsetzung der reaktiven Komponenten b), c) und d) kann getrennt von der Zugabe der Komponente a) und gegebenenfalls e) erfolgen. Auch die Herstellung des Umsetzungsproduktes aus Komponenten b),c) und d) kann in mehreren Schritten erfolgen, beispielsweise durch Umsetzung von Komponenten c) und d) gefolgt von der Umsetzung des Reaktionsproduktes mit Komponente b).

Vorzugsweise werden sämtliche Komponenten der Zusammensetzung miteinander vermischt und anschließend in der Schmelze, beispielsweise in einem Extruder, zur Reaktion gebracht.

In einer weiteren bevorzugten Ausführungsform wird ein Teil der Komponenten der Zusammensetzung in einen Extruder eingebracht und stromabwärts werden weitere Komponenten oder Mischungen von zwei oder mehreren weiteren Komponenten der Zusammensetzung in den Extruders eingebracht und der sich bereits im Extruder befindlichen Schmelze zugefügt.

Zur Beschleunigung der Kopplungsreaktion kann das Erhitzen der Komponenten in Gegenwart eines Katalysators für die Kopplungsreaktion erfolgen. Dabei handelt es sich üblicherweise um eine Lewis-Säure oder eine Lewis Base.

Bevorzugt eingesetzte Katalysatoren für Nicht-Diisocyanat-Kopplungs-reagenzien sind Alkali- oder Erdalkalisalze von Acetylacetonaten, insbesondere Lithiumacetylacetonat oder Natriumacetylacetonat und/oder Alkalialkoxylate, insbesondere Natriummethoxylat oder Lithiummethoxylat, und/oder Lithiumhalogenide, insbesondere Lithiumchlorid, oder tertiäre Amine, insbesondere Trialkylamine oder cyclische tertiäre Amine, wie Diaza-bicyclo[2.2.2]octan (DABCO), Dimethylaminopyridin (DMAP), Guanidin oder Morpholin, oder organische Zinnverbindungen, wie Dibutylzinndilaurat, Dibutylzinn-bis-(2-ethylhexanoat), Dibutylzinndibutyrat, Dibutylzinndimethylat, Dibutylzinn-dioctanoat oder Zinn-(II)-ethylhexanoat.

Für multifunktionelle Isocyanat-Kopplungsreagenzien können im Prinzip die gleichen Katalysatoren eingesetzt werden, doch sind aus Gründen der verringerten Neigung zur Verfärbung der Formmassen tertiäre Amine oder organische Zinnverbindungen bevorzugt.

Die Umsetzung der Komponenten erfolgt typischerweise bei Temperaturen zwischen 100 und 240°C, vorzugsweise 150 und 220°C, und die Reaktionsdauer beträgt typischerweise zwischen 0,5 und 60 Minuten.

Der Anteil an multifunktionellen Kopplungsreagenz kann in breiten Grenzen gewählt werden. Vorzugsweise setzt man so viel Kopplungsreagenz ein, dass auf ein Mol Hydroxylgruppen des hydroxyl-funktionalisierten Polyoxymethylens 0,2 bis 2,0 Mol, vorzugsweise 0,5 bis 2,0 Mol des multifunktionellen Kopplungsreagenz entfallen.

Die Katalysatoren werden erfindungsgemäß in Mengen von 0,1 ppm bis 10.000 ppm, insbesondere von 1 ppm bis 1.000 ppm, bezogen auf das umzusetzende Gemisch, eingesetzt.

Beispiele für geeignete Lewis-Säure Katalysatoren sind LiX, Sb₂O₃, GeO₂, BX₃, MgX₂, BiX₃, SnX₄, SbX₅, FeX₃, GeX₄, GaX₃, HgX₂, ZnX₂, AlX₃, PX₃, TiX₄, MnX₂, ZrX₄, [R⁴N]⁺_{q} A^{q-}, [R⁴P]⁺_{q} A^{q-} 4", wobei X ein Halogenatom, also I, Br, Cl, F und/oder eine Gruppe -O-R oder -R sein kann, wobei R Alkyl, Cycloalkyl, Aryl oder Aralkyl bedeutet, q eine ganze Zahl von 1 bis 3 bedeutet und A ein qwertiges Anion ist, beispielsweise Halogenid, Sulfat oder Carboxylat, sowie Sulfoniumsalze oder Titanylverbindungen.

Beispiele für geeignete Lewis-Base Katalysatoren sind Metallsalze von Carbonsäuren, vorzugsweise die Alkali- und Erdalkalisalze, insbesondere die Lithiumsalze, wie Lithiumversatat; oder Komplexe von Metallen mit Acetylaceton, vorzugsweise die Alkali- und Erdalkalikomplexe, insbesondere Lithiumacetylacetonat; oder Alkoxylate oder Phenolate von Metallsalzen, vorzugsweise von Alkali- oder Erdalkalimetallen; oder tertiäre Amine, insbesondere Trialkylamine oder cyclische tertiäre Amine, wie Diazabicyclo[2.2.2]octan (DABCO), Dimethylaminopyridin (DMAP), Guanidin oder Morpholin; oder organische Zinnverbindungen, wie Dibutylzinndilauratl, Dibutylzinn-bis-(2-ethylhexanoat), Dibutylzinndibutyrat, Dibutylzinndimethylat, Dibutylzinn-dioctanoat oder Zinn-(11)-ethylhexanoat.

Auch Mischungen verschiedener Katalysatoren können eingesetzt werden.

Die Umsetzung der oben beschriebenen Komponenten kann in beliebigen Reaktoren erfolgen, beispielsweise in Rührkesseln, statischen Mischern oder insbesondere in Extrudern oder in Knetern.

Dazu werden die Komponenten gegebenenfalls zusammen mit dem jeweiligen 'Katalysator einzeln oder als Mischung von zwei oder mehreren Komponenten dem Reaktor zugeführt und gegebenenfalls im Gasstrom und/oder im Vakuum miteinander umgesetzt.

Durch die Behandlung im Gasstrom und/oder im Vakuum wird die Reaktion beschleunigt und die Reaktionszeiten verkürzen sich entsprechend. Dieses ist besonders beim Einsatz von aktiven Estern oder Amiden als Kopplungs-reagenzien zu beobachten, da bei diesen Reaktionen niedermolekulare Spaltprodukte entstehen, die durch die Behandlung abgeführt werden und das Gleichgewicht in die gewünschte Richtung verschieben.

Als Gase lassen sich alle Gase einsetzen, die das Reaktionsgemisch nicht oder nicht nennenswert abbauen. Bespiele dafür sind Luft oder vorzugsweise Inertgase, wie Stickstoff oder Edelgase.

Die Reaktionstemperaturen betragen typischerweise mehr als 60°C, vorzugsweise 100 bis 240°C, insbesondere 150 bis 220°C.

Die Reaktionsdauer beträgt typischerweise 0,5 bis 60 Minuten.

In einer Ausführungsform des erfindungsgemäßen Verfahrens erfolgt die Reaktion durch Vermischen von mindestens drei der Komponenten b), c) und d), gegebenenfalls der Komponenten a) und e), des Katalysators und gegebenenfalls von weiteren Zusatzstoffen und durch thermische Behandlung des Gemisches gegebenenfalls im Gasstrom und/oder im Vakuum für solch eine Zeitspanne, bis der gewünschte Grad an Umsetzung der Komponenten b), c) und d) erreicht wurde. Dabei werden solche Temperaturen gewählt, dass das Reaktionsgemisch in flüssiger Phase vorliegt bzw. sich eine flüssige Phase in dem Reaktionsgemisch ausbildet.

Die erfindungsgemäßen Zusammensetzungen zeichnen sich gegenüber Zusammensetzungen enthaltend lediglich Komponenten a) und b) und gegebenenfalls e), nicht jedoch das Reaktionsprodukt der Komponenten b), c) und d) durch eine verbesserte Dispergierung der Phase des thermoplastischen Elastomeren in der POM-Matrix aus. Dabei wirkt das Reaktionsprodukt der Komponenten b), c) und d) als Phasenvermittler zwischen Komponenten a) und b) und führt zur Ausbildung kleinerer Teilchen aus thermoplastischem Elastomer. Dieses macht sich durch eine erheblich verbesserte Zähigkeit und Bruchdehnung der aus den erfindungsgemäßen Formmassen hergestellten Formkörper bemerkbar.

Die erfindungsgemäßen Zusammensetzungen können weitere an sich bekannte Zusatzstoffe, die bereits bei der oder im Anschluss an die Herstellung der Zusammensetzungen zugesetzt werden können.

Beispiele für Zusatzstoffe sind Verarbeitungshilfen, wie Antioxidantien, Säurefänger, Formaldehydfänger, UV-Stabilisatoren, Wärme-Stabilisatoren, Haftvermittler, Gleitmittel, Nukleierungsmittel oder Entformungsmittel, Füllstoffe, Verstärkungsmaterialien oder Antistatika; oder Zusätze, die der Formmasse eine gewünschte Eigenschaft verleihen, wie Farbstoffe und/oder Pigmente und/oder elektrische Leitfähigkeit vermittelnde Zusätze; sowie Mischungen dieser Zusätze, ohne jedoch den Umfang auf die genannten Beispiele zu beschränken.

Die Verarbeitung der erfindungsgemäßen Zusammensetzungen kann durch Vermischen der feinteiligen, beispielsweise pulverförmigen oder granulierten Komponenten und anschließende thermoplastische Verarbeitung erfolgen oder durch Mischen der Komponenten in dafür geeigneten beheizbaren Mischaggregaten. Geeignete Mischaggregate und -verfahren sind beispielsweise beschrieben in: Saechtling, Kunststoff-Taschenbuch, Hanser Verlag, 27. Auflage 1998, auf den Seiten 202 bis 217, worauf Bezug genommen wird.

Die erfindungsgemäßen Zusammensetzungen lassen sich für Formteile jeglicher Art, insbesondere zur Herstellung von Fasern, Folien, Schläuchen, Rohren, Stäben oder Profilen, einsetzen.

Die Verarbeitung der erfindungsgemäßen Zusammensetzungen kann durch Blasformen, Rotationsformen, Spritzguss oder Extrusion erfolgen.

Besonders bevorzugt werden die erfindungsgemäßen Zusammensetzung zur Herstellung von Lautsprechergittern eingesetzt.

Die Erfindung betrifft daher auch die Verwendung der Zusammensetzungen für die oben genannten Zweck.

Die nachfolgenden Beispiele erläutern die Erfindung ohne diese zu begrenzen. Mengenangaben erfolgen dabei, sofern nichts anderes angegeben ist, immer in Gewichtsteilen.

Die durchgeführten Untersuchungen erfolgten auf Basis nachstehender Rezeptur:
- Komponente a):: (100 - (b+c+d+0,35)) Gew.% POM-Pulver (3,4 Gew.-% Dioxolan), MVR (190°C, 2,16kg) = 9,0 cm³/10min,
- Komponente b):: 18 Gew.-% Elastollan B 85 A10 Granulat (Elastogran)
- Komponente c):: POM-Pulver mit endständigen OH-Gruppen (POM-OH), 81 mmol/kg OH-Gruppen, MVR (190°C, 2,16kg) = 51,4 cm³/10min, oder
POM mit seitenständigen OH-Gruppen (POM-(OH)ₓ),
270 mmol/kg OH-Gruppen, MVR (190°C, 2,16kg) =
11,0 cm³/10 min, Jeweilige Konzentrationen siehe Tabelle 1
- Komponente d):: Toluoldiisocyanat-Dimer (TDI-Dimer), 25 Gew.-%-iges Konzentrat in Poly(ε-caprolacton), gemahlenes Granulat (Labormühle Fa. Retsch, Modell ZM 1) , TDI wurde im äquimolaren Verhältnis bezogen auf die Gesamtkonzen-tration an OH-Gruppen in POM eingesetzt. Jeweilige Konzentrationen siehe Tabelle 1
- Stabilisierung:: 0,2 Gew.-% Irganox 1010 (Ciba), 0,15 Gew.-% Licowachs C (Clariant)

Alle Komponenten wurden zunächst bei ca. 70 °C in einem Vakuumofen der Fa. Binder getrocknet und anschließend auf einem Mischer der Fa. Dirk und Söhne (Modell Diosna R 10 A) gemischt. Für die Compoundierung wurde ein Extruder der Fa. Berstorff (Modell ZE 25) verwendet (Zonentemperatur 190°C, Massetemperatur ca. 210°C). Die Schneckenkonfiguration mit Knetelementen wurde so gewählt, daß eine effektive Durchmischung der Komponenten während der Reaktivextrusion gegeben ist.

Die Ausprüfung der hergestellten Compounds erfolgte gemäß folgender Normen:
- MVR (190°C, 2,16kg): ISO 1133
- Zug-Dehnungs Messung: ISO 527-1/-2
- Charpy Kerbschlagzähigkeit: ISO 179-1/1eA
- Elektronischer Durchstoßversuch (Schädigungsarbeit): ISO 6603-2

Die durchgeführten Experimente sowie die Charakterisierung der Compounds sind in den folgenden Tabellen zusammengefaßt.

**Tabelle 1: MVR und mechanischen Eigenschaften der Compounds**

| Versuch | TDI-Konzentrat | POM-OH | MVR (190°C, 2,16kg) | E | σ_{br} | ε_{br} |
|---|---|---|---|---|---|---|
| | [Gew.-%] | [Gew.-%] | [cm³/10min] | [MPa] | [MPa] | [%] |
| 1 | 0 | 0 | 5,9 | 1650 | 36,4 | 66,4 |
| 2 | 0,82 | 0 | 5,7 | 1584 | 35,7 | 87,5 |
| 3 | 1,06 | 0 | 5,5 | 1606 | 37,0 | 94,3 |
| 4 | 1,47 | 0 | 5,6 | 1575 | - | - |
| 5 | 0 | 5 | 6,2 | 1641 | 36,7 | 80,9 |
| 6 | 0 | 10 | 6,4 | 1623 | 36,3 | 84,7 |
| 7 | 0,82 | 5 | 6,5 | 1514 | 37,8 | 126,1 |
| 8 | 1,06 | 10 | 6,3 | 1599 | 37,4 | 99,4 |
| | | | | | | |

| Versuch | TDI-Konzentrat | POM-(OH)ₓ | MVR (190°C, 2,16kg) | E | σ_{br} | ε_{br} |
|---|---|---|---|---|---|---|
| | [Gew.-%] | [Gew.-%] | [cm³/10min] | [MPa] | [MPa] | [%] |
| 9 | 0 | 1 | 6,0 | 1648 | - | - |
| 10 | 0 | 2 | 6,2 | 1666 | - | - |
| 11 | 0 | 5 | 6,3 | 1654 | - | - |
| 12 | 0,75 | 1 | 5,8 | 1623 | - | - |
| 13 | 0,93 | 2 | 6,0 | 1634 | - | - |
| 14 | 1,47 | 5 | 5,8 | 1623 | - | - |

| | | | | | | |
|---|---|---|---|---|---|---|
| E = Elastizitätsmodul, σ_{br} = Bruchspannung, σ_{br} = Bruchdehnung. | | | | | | |

Die alleinige Zugabe von TDI (Tabelle 1, Versuche 2-4) führt zu einer leichten Erniedrigung des MVR-Wertes und zu einer erhöhten Bruchdehnung im Vergleich zum Standardcompound ohne Komponenten c) und d) (Versuch 1). Dies kann auf eine Vernetzung der TPU-Phase durch das TDI zurückgeführt werden.

Die leichte Erhöhung des MVR-Wertes durch die Zugabe von OH-funktionalisiertem POM (Versuche 5, 6, 9-11) ist durch den höheren MVR-Wert des eingesetzten POM-OH und POM-(OH)ₓ zu erklären. Auch hier ist eine leichte Erhöhung der Bruchdehnung zu beobachten.

Nur die Kombination aus TDI und OH-funktionalisiertem POM führte zu einer signifikanten Erhöhung der Bruchdehnung. Dies ist insbesondere bei dem Compound mit 0,82% TDI-Konzentrat und 5% POM-OH zu beobachten, der eine Bruchdehnung von 126% aufweist.

Der Einfluß von TDI bzw. OH-funktionalisiertem POM auf die Festigkeitseigenschaften (E-Modul) kann im allgemeinen vernachlässigt werden, d.h. kein signifikanter Festigkeitsverlust im Vergleich zum Standardcompound (Versuch 1). Lediglich bei Versuch 7 (0,82% TDI-Konzentrat, 5% POM-OH) war ein leichter Abfall des E-Modul zu beobachten.

**Tabelle 2: Vergleich der Zähigkeits-Eigenschaften der hergestellten Compounds**

| Versuch | TDI-Konzentrat | POM-OH | a_{CN}, 23°C | a_{CN}, -30°C | W_{D}, 23°C 2mm Platte | W_{D}, -30°C 2mm Platte |
|---|---|---|---|---|---|---|
| | [Gew.-%] | [Gew.-%] | [kJ/m²] | [kJ/m²] | [J] | [J] |
| 1 | 0 | 0 | 17,3 | 9,6 | 11,0 | 12,4 |
| 2 | 0,82 | 0 | 19,2 | 9,3 | 13,1 | 8,9 |
| 3 | 1,06 | 0 | 19,4 | 10,2 | 17,1 | 11,2 |
| 4 | 1,47 | 0 | 19,5 | 10,7 | 18,8 | 8,3 |
| 5 | 0 | 5 | 17,1 | 9,0 | 20,2 | 15,5 |
| 6 | 0 | 10 | 17,0 | 9,2 | 19,8 | 23,4 |
| 7 | 0,82 | 5 | 22,7 | 11,3 | 19,6 | 16,7 |
| 8 | 1,06 | 10 | 20,9 | 10,9 | 18,8 | 12,9 |
| | | | | | | |

| Versuch | TDI-Konzentrat | POM-(OH)ₓ | a_{CN}, 23°C | a_{CN}, -30°C | W_{D}, 23°C 2mm Platte | W_{D}, -30°C 2mm Platte |
|---|---|---|---|---|---|---|
| | [Gew.-%] | [Gew.-%] | [kJ/m²] | [kJ/m²] | [J] | [J] |
| 9 | 0 | 1 | 18,1 | 10,1 | 18,6 | 21,7 |
| 10 | 0 | 2 | 17,1 | 8,9 | 20,0 | 21,5 |
| 11 | 0 | 5 | 18,5 | 9,1 | 26,1 | 19,8 |
| 12 | 0,75 | 1 | 21,4 | 10,5 | 19,0 | 13,3 |
| 13 | 0,93 | 2 | 19,2 | 9,6 | 18,5 | 19,9 |
| 14 | 1,47 | 5 | 21,7 | 10,4 | 19,0 | 15,4 |

| | | | | | | |
|---|---|---|---|---|---|---|
| a_{CN} = Charpy Kerbschlagzähigkeit, W_{D} = Schädigungsarbeit. | | | | | | |

Der alleinige Einsatz von TDI (Tabelle 2, Versuche 2-4) führte zu geringfügig erhöhten Kerbschlagzähigkeiten (a_{CN}) und Schädigungsarbeiten (W_{D}) im Vergleich zum Standardcompound ohne Komponenten c) und d) (Versuch 1).

Die Verwendung von OH-funktionalisiertem POM allein (Versuche 5, 6, 9-11) führte lediglich zu einer signifikanten Erhöhung der Schädigungsarbeit. Die besten Ergebnisse, d.h. signifikante Verbesserung von a_{CN} und W_{D} im Vergleich zum Standardcompound (Versuch 1), wurden durch eine Kombination von TDI und OH-funktionalisiertem POM erhalten (Versuche 7, 8, 12-14). Zusätzlich beobachtete man eine deutliche Verbesserung der Zähigkeitseigenschaften bei tiefen Temperaturen, was sich besonders in den Werten für die Schädigungsarbeit bei -30 °C wiederspiegelt.

Die durchgeführten Experimente zeigen eindeutig, daß die in-situ Bildung von_POM-TPU Copolymeren (Phasenvermittler zwischen POM- und TPU-Phase), die durch Kopplung von OH-funktionalisiertem POM an die TPU-Phase mittels Diisocyanat entstehen, essentiell ist für die Verbesserung der Zähigkeits-eigenschaften (a_{CN} + W_{D}) und der Bruchcharakteristik (signifikant erhöhte Bruchdehnung), ohne dabei die Festigkeitseigenschaften negativ zu beeinflussen (unveränderter E-Modul).

## Patentansprüche

1. Zusammensetzungen enthaltend
a) Polyoxymethylen,
b) thermoplastisches Elastomer mit aktiven Wasserstoffatomen,
c) aktive Wasserstoffatome enthaltendes Polyoxymethylen, das sich von Komponente a) unterscheidet,
d) Reagenz zur kovalenten Kopplung von Komponenten b) und c), und
e) gegebenenfalls einen weiteren Schlagzähmodifikator, der sich von Komponente b) unterscheidet.

2. Zusammensetzungen nach Anspruch 1, **dadurch gekennzeichnet, daß** Komponente d) ein Diisocyanat, vorzugsweise eine aliphatisches, cycloaliphatisches und/oder aromatisches Diisocyanat ist.

3. Zusammensetzungen nach Anspruch 1, **dadurch gekennzeichnet, daß** Komponente c) ein aktivierter Diester oder ein aktiviertes Diamid, vorzugsweise Diphenylcarbonat, Diphenyl-terephthalat, Carbonyldiimidazol oder Carbonyl-biscaprolactamat ist.

4. Zusammensetzungen nach Anspruch 1, **dadurch gekennzeichnet, daß** Komponente b) ein thermoplastisches Polyester-Elastomer (TPE-E), ein thermoplastisches Polyamid-Elastomer (TPE-A)oder insbesondere ein thermoplastisches Polyurethan-Elastomer (TPE-U) ist.

5. Zusammensetzungen nach Anspruch 1, **dadurch gekennzeichnet, daß** Komponente c) ein hydroxyl-funktionalisiertes Polyoxymethylen ist, das sich ableitet von Copolymeren des Trioxans mit dem Formal des-Trimethylol-propans, des Trioxans mit den α,α- und α,β-Isomeren des Glycerinformals oder des Trioxans und dem Formal des 1,2,6-Hexantriols.

6. Zusammensetzungen nach Anspruch 1, **dadurch gekennzeichnet, daß** Komponente c) ein Polyoxymethylen-Homo- oder -Copolymer mit endständigen Hydroxyalkylengruppen, vorzugsweise Hydroxyethylengruppen, ist.

7. Zusammensetzungen nach Anspruch 1, **dadurch gekennzeichnet, daß** Komponente b) ein thermoplastisches Polyurethan-Elastomer (TPE-U) ist.

8. Zusammensetzungen nach Anspruch 7, **dadurch gekennzeichnet, daß** die Zusammensetzungen als Komponente c) hydroxyl-funktionalisierte Polyoxymethylene enthalten, die sich ableiten von Copolymeren des Trioxans mit dem Formal des Trimethylol-propans, des Trioxans mit den α,α- und α,β-Isomeren des Glycerinformals oder des Trioxans und dem Formal des 1,2,6-Hexantriols oder deren Komponente c) Polyoxy-methylen-Homo- oder -Copolymeren mit endständigen Hydroxyalkylen-gruppen, vorzugsweise Hydroxyethylengruppen, bedeutet.

9. Zusammensetzungen nach Anspruch 1, **dadurch gekennzeichnet, daß** das die Menge an Komponente a) 40 bis 98 Gew. %, die Menge an Komponente b) 1 bis 50 Gew. % und die Menge an Komponente c) 0,1 bis 20 Gew. % beträgt, wobei die Mengenangaben auf die Summe der Komponenten a), b), c), d) und gegebenenfalls e) bezogen sind.

10. Verfahren zur Herstellung der Zusammensetzungen nach Anspruch 1 umfassend die Maßnahmen:
i) Vorlage von Polyoxymethylen (Komponente a),
ii) Vorlage von thermoplastischem Elastomer mit aktiven Wasserstoffatomen (Komponente b),
iii) Vorlage von aktive Wasserstoffatome enthaltendem Polyoxymethylen, das sich von in Schritt i) eingesetztem Polyoxymethylen unterscheidet (Komponente c),
iv) Vorlage von multifunktionellem Kopplungsreagenz, das sowohl mit den aktiven Wasserstoffatomen des Polyoxymethylens als auch mit den aktiven Wasserstoffatomen des thermoplastischen Elastomeren reagiert und kovalente Bindungen auszubilden vermag (Komponente d),
v) gegebenenfalls Vorlage eines weiteren Schlagzäh-modifikators, der sich von dem in Schritt ii) eingesetzten thermoplastischem Elastomer unterscheidet (Komponente e),
vi) Vermischen der reaktiven Komponenten b), c) und d) und gegebenenfalls der nicht-reaktiven Komponenten a) und/oder e),
vii) Erhitzen der Zusammensetzung um die kovalente Kopplung der reaktiven Komponenten b), c) und d) zu bewirken, und
viii) gegebenenfalls Vermischen des in Schritt vii) erhaltenen Reaktionsproduktes mit Komponente a) und/oder e).

11. Verfahren nach Anspruch 10, **dadurch gekennzeichnet, dass** das Erhitzen in Gegenwart eines Katalysators erfolgt, der eine Lewis-Säure oder eine Lewis Base ist.

12. Verfahren nach Anspruch 11, **dadurch gekennzeichnet, dass** als Katalysator Alkali- oder Erdalkalisalze von Acetylacetonaten, insbesondere Lithiumacetylacetonat oder Natriumacetylacetonat und/oder Alkalialkoxylate, insbesondere Natriummethoxylat oder Lithiummethoxylat, und/oder Lithiumhalogenide, insbesondere Lithiumchlorid, oder tertiäre Amine, bevorzugt Trialkylamine oder cyclische tertiäre Amine, insbesondere Diazabicyclo[2.2.2]octan (DABCO), Dimethylaminopyridin (DMAP), Guanidin oder Morpholin, oder organische Zinnverbindungen, bevorzugt Dibutylzinndilaurat, Dibutylzinn-bis-(2-ethylhexanoat), Dibutylzinndibutyrat, Dibutylzinndimethylat, Dibutylzinn-dioctanoat oder Zinn-(II)-ethylhexanoat eingesetzt werden.

13. Verfahren nach Anspruch 12, **dadurch gekennzeichnet, dass** die Zusammensetzung auf Temperaturen zwischen 100 und 240°C, vorzugsweise 150 und 220°C, erhitzt wird und daß die Reaktionsdauer zwischen 0,5 und 60 Minuten beträgt.

14. Verfahren nach Anspruch 10, **dadurch gekennzeichnet, dass** der Anteil an multifunktionellen Kopplungsreagenz so gewählt wird, dass auf ein Mol Hydroxylgruppen des hydroxyl-funktionalisierten Polyoxymethylens 0,2 bis 2,0 Mol, vorzugsweise 0,5 bis 2,0 Mol des multifunktionellen Kopplungsreagenz entfallen.

15. Verfahren nach Anspruch 10, **dadurch gekennzeichnet, dass** das Erhitzen auf solche Temperaturen erfolgt, dass das Reaktionsgemisch in flüssiger Phase vorliegt oder das sich eine flüssige Phase in dem Reaktionsgemisch ausbildet.

16. Verwendung der Zusammensetzungen nach Anspruch 1 zur Herstellung von Formteilen, insbesondere zur Herstellung von Fasern, Folien, Schläuchen, Rohren, Stäben, Profilen durch Blasformen, Rotationsformen, Spritzguss oder Extrusion. ,

17. Verwendung nach Anspruch 16, **dadurch gekennzeichnet, dass** die Formteile Lautsprechergitter sind.

## Claims

1. A composition comprising
a) polyoxymethylene,
b) thermoplastic elastomer having active hydrogen atoms,
c) polyoxymethylene which differs from component a) and contains active hydrogen atoms,
d) reagent for covalent coupling of components b) and c), and
e) if appropriate, another impact modifier, which differs from component b).

2. The composition as claimed in claim 1, wherein component d) is a diisocyanate, preferably an aliphatic, cycloaliphatic, and/or aromatic diisocyanate.

3. The composition as claimed in claim 1, wherein component c) is an activated diester or an activated diamide, preferably diphenyl carbonate, diphenyl terephthalate, carbonyldiimidazole, or carbonyl biscaprolactamate.

4. The composition as claimed in claim 1, wherein component b) is a thermoplastic polyester elastomer (TPE-E), a thermoplastic polyamide elastomer (TPE-A), or in particular a thermoplastic polyurethane elastomer (TPE-U).

5. The composition as claimed in claim 1, wherein component c) is a hydroxy-functionalized polyoxymethylene which derives from copolymers of trioxane with the formal of trimethylolpropane, of trioxane with the α,α- and α,β-isomers of glycerol formal, or of trioxane with the formal of 1,2,6-hexanetriol.

6. The composition as claimed in claim 1, wherein component c) is a polyoxymethylene homo- or copolymer having terminal hydroxyalkylene groups, preferably hydroxyethylene groups.

7. The composition as claimed in claim 1, wherein component b) is a thermoplastic polyurethane elastomer (TPE-U).

8. The composition as claimed in claim 7, which comprises, as component c), hydroxy-functionalized polyoxymethylenes which derive from copolymers of trioxane with the formal of trimethylolpropane, of trioxane with the α,α- and α,β-isomers of glycerol formal, or of trioxane with the formal of 1,2,6-hexanetriol, or whose component c) is polyoxymethylene homo- or copolymers having terminal hydroxyalkylene groups, preferably hydroxyethylene groups.

9. The composition as claimed in claim 1, wherein the amount of component a) is from 40 to 98% by weight, the amount of component b) is from 1 to 50% by weight, and the amount of component c) is from 0.1 to 20% by weight, the stated amounts being based on the entirety of components a), b), c), d), and, if appropriate, e).

10. A process for preparation of the compositions as claimed in claim 1, encompassing the following measures:
i) using, as initial charge, polyoxymethylene (component a),
ii) using, as initial charge, thermoplastic elastomer having active hydrogen atoms (component b),
iii) using, as initial charge, polyoxymethylene which contains active hydrogen atoms and which differs from polyoxymethylene used in step i) (component c),
iv) using, as initial charge, multifunctional coupling reagent which reacts both with the active hydrogen atoms of the polyoxymethylene and with the active hydrogen atoms of the thermoplastic elastomer and can form covalent bonds (component d),
v) if appropriate, using, as initial charge, another impact modifier which differs from the thermoplastic elastomer used in step ii) (component e),
vi) mixing of the reactive components b), c), and d), and, if appropriate, of the nonreactive components a) and/or e),
vii) heating of the composition in order to bring about the covalent coupling of the reactive components b), c), and d), and
viii) if appropriate, mixing of the reaction product obtained in step vii) with component a) and/or e).

11. The process as claimed in claim 10, wherein the heating takes place in the presence of a catalyst which is a Lewis acid or a Lewis base.

12. The process as claimed in claim 11, wherein the catalyst used comprises the alkali metal or alkaline earth metal salts of acetylacetonates, in particular lithium acetylacetonate or sodium acetylacetonate, and/or alkali metal alcoholates, in particular sodium methanolate or lithium methanolate, and/or lithium halides, in particular lithium chloride, or tertiary amines, preferably trialkylamines, or cyclic tertiary amines, in particular diazabicyclo[2.2.2]octane (DABCO), dimethylaminopyridine (DMAP), guanidine, or morpholine, or organotin compounds, preferably dibutyltin dilaurate, dibutyltin bis(2-ethylhexanoate), dibutyltin dibutyrate, dibutyltin dimethoxide, dibutyltin dioctanoate, or stannous ethylhexanoate.

13. The process as claimed in claim 12, wherein the composition is heated to temperatures of from 100 to 240°C, preferably from 150 to 220°C, and wherein the reaction time is from 0.5 to 60 minutes.

14. The process as claimed in claim 10, wherein the content of multifunctional coupling reagent is selected in such a way that for every mole of hydroxy groups of the hydroxy-functionalized polyoxymethylene there are from 0.2 to 2.0 mol, preferably from 0.5 to 2.0 mol, of the polyfunctional coupling reagent.

15. The process as claimed in claim 10, wherein the temperatures to which heating takes place are such that the reaction mixture is liquid or that a liquid phase forms in the reaction mixture.

16. The use of the compositions as claimed in claim 1 for production of moldings, in particular for production of fibers, of foils, of hoses, of pipes, of bars, or of profiles, via blow molding, rotomolding, injection molding, or extrusion.

17. The use as claimed in claim 16, wherein the moldings are loudspeaker grilles.

## Revendications

1. Compositions contenant
a) du polyoxyméthylène,
b) un élastomère thermoplastique à atomes d'hydrogène actifs,
c) un polyoxyméthylène contenant des atomes d'hydrogène actifs, qui se distingue du composant a),
d) un réactif pour la combinaison covalente des composants b) et c), et
e) éventuellement un autre modificateur antichoc, qui se distingue du composant b).

2. Compositions selon la revendication 1, **caractérisées en ce que** le composant d) est un diisocyanate, de préférence un diisocyanate aliphatique, cycloaliphatique et/ou aromatique.

3. Compositions selon la revendication 1, **caractérisées en ce que** le composant c) est un diester activé ou un diamide activé, de préférence le carbonate de diphényle, le téréphtalate de diphényle, le carbonyldiimidazole ou le carbonyl-bis-caprolactamate.

4. Compositions selon la revendication 1, **caractérisées en ce que** le composant b) est un élastomère-polyester thermoplastique (TPE-E), un élastomère-polyamide thermoplastique (TPE-A) ou en particulier un élastomère-polyuréthanne thermoplastique (TPE-U).

5. Compositions selon la revendication 1, **caractérisées en ce que** le composant c) est un polyoxyméthylène à fonctionnalité hydroxy, qui dérive de copolymères du trioxanne avec le formal du triméthylolpropane, du trioxanne avec les isomères α,α et α,β du glycérol-formal ou du trioxanne et avec le formal du 1,2,6-hexanetriol.

6. Compositions selon la revendication 1, **caractérisées en ce que** le composant c) est un homopolymère polyoxyméthylène ou un copolymère de polyoxyméthylène à groupes hydroxyalkylène, de préférence des groupes hydroxyéthylène, en bout de chaîne.

7. Compositions selon la revendication 1, **caractérisées en ce que** le composant b) est un élastomère-polyuréthanne thermoplastique (TPE-U).

8. Compositions selon la revendication 7, **caractérisées en ce que** les compositions contiennent en tant que composant c) des polyoxyméthylènes à fonctionnalité hydroxy qui dérivent de copolymères du trioxanne avec le formal du triméthylolpropane, du trioxanne avec les isomères α,α et α,β du glycérol-formal ou du trioxanne et avec le formal du 1,2,6-hexanetriol ou de leur composant c) homopolymères polyoxyméthylène ou copolymères de polyoxyméthylène à groupes hydroxyalkylène, de préférence des groupes hydroxyéthylène, en bout de chaîne.

9. Compositions selon la revendication 1, **caractérisées en ce que** la quantité de composant a) va de 40 à 98 % en poids, la quantité du composant b) va de 1 à 50 % en poids et la quantité du composant c) va de 0,1 à 20 % en poids, les quantités étant données par rapport à la somme des composants a), b), c), d) et éventuellement e).

10. Procédé pour la préparation des compositions selon la revendication 1, comprenant les opérations suivantes :
i) disposition au préalable de polyoxyméthylène (composant a),
ii) disposition au préalable d'élastomère thermoplastique à atomes d'hydrogène actifs (composant b),
iii) disposition au préalable de polyoxyméthylène contenant des atomes d'hydrogène actifs, qui se distingue du polyoxyméthylène utilisé dans l'étape i) (composant c),
iv) disposition au préalable de réactif de couplage multifonctionnel, qui réagit et peut former des liaisons covalentes aussi bien avec les atomes d'hydrogène actifs du polyoxyméthylène qu'avec les atomes d'hydrogène actifs de l'élastomère thermoplastique (composant d),
v) éventuellement disposition au préalable d'un autre modificateur antichoc, qui se distingue de l'élastomère thermoplastique utilisé dans l'étape ii) (composant e),
vi) mélange des composants réactifs b), c) et d) et éventuellement des composants non réactifs a) et/ou e),
vii) chauffage de la composition afin de provoquer la combinaison covalente des composants réactifs b), c) et d), et
viii) éventuellement mélange du produit de réaction obtenu dans l'étape vii) avec le composant a) et/ou le composant e).

11. Procédé selon la revendication 10, **caractérisé en ce que** le chauffage est effectué en présence d'un catalyseur qui est un acide de Lewis ou une base de Lewis.

12. Procédé selon la revendication 11, **caractérisé en ce qu'**on utilise comme catalyseur des sels alcalins ou alcalino-terreux d'acétylacétonates, en particulier l'acétylacétonate de lithium et/ou l'acétylacétonate de sodium, et/ou des produits d'alcoxylation de métaux alcalins, en particulier le méthoxylate de sodium ou le méthoxylate de lithium et/ou des halogénures de lithium, en particulier le chlorure de lithium, ou des amines tertiaires, de préférence des trialkylamines ou des amines cycliques tertiaires, en particulier le diazabicyclo[2.2.2]octane (DABCO), la diméthylaminopyridine (DMAP), la guanidine ou la morpholine, ou des composés organostanniques, de préférence le dilaurate de dibutylétain, le bis(2-éthylhexanoate) de dibutylétain, le dibutyrate de dibutylétain, le diméthylate de dibutylétain, le dioctanoate de dibutylétain ou l'éthylhexanoate stanneux.

13. Procédé selon la revendication 12, **caractérisé en ce que** la composition est chauffée à des températures comprises entre 100 et 240 °C, de préférence entre 150 et 220 °C et **en ce que** la durée de la réaction est comprise entre 0,5 et 60 minutes.

14. Procédé selon la revendication 10, **caractérisé en ce qu'**on choisit la proportion du réactif de couplage multifonctionnel de manière que 0,2 à 2,0 moles, de préférence de 0,5 à 2,0 moles du réactif de couplage multifonctionnel soient présentes par mole de groupes hydroxy du polyoxyméthylène à fonction hydroxy.

15. Procédé selon la revendication 10, **caractérisé en ce qu'**on effectue le chauffage à des températures telles que le mélange réactionnel soit présent en phase liquide, ou qu'une phase liquide se forme dans le mélange réactionnel.

16. Utilisation des compositions selon la revendication 1, pour la production de pièces moulées, en particulier pour la production de fibres, de films, de tuyaux souples, de tubes, de joncs, de profilés, par moulage par soufflage, moulages par rotation, moulage par injection ou extrusion.

17. Utilisation selon la revendication 16, **caractérisée en ce que** les pièces moulées sont des grilles-écrans de haut-parleurs.
